# DEMANDE DE BREVET EUROPEEN

(11) **EP 0 971 429 A1**
(43) Date de publication de la demande: **12.01.2000**
(21) Numéro de dépôt: 99401636.8
(22) Date de dépôt: 01.07.1999
(51) Int. Cl.: H01M 10/16, H01M 2/02, H01M 2/06

(54) **Accumulateur couchable à faisceau fixé**

(30) Priorité: 06.07.1998 FR 9808623
(71) Demandeur: ALCATEL, 75008 Paris (FR)
(72) Inventeur: La désignation de l'inventeur n'a pas encore été déposée
(74) Mandataire: Laroche, Danièle

(57) **Abrégé**

L'invention concerne un accumulateur présentant un conteneur comportant au moins une borne de sortie de courant, dans lequel est disposé un faisceau relié à ladite borne et comprenant une pluralité d'électrodes planes (5, 6) et au moins un séparateur (2), au moins un composant dudit faisceau étant soudé à la paroi dudit conteneur située d'un côté distinct de celle portant la borne, ledit composant étant un séparateur ou une chambre de recombinaison.

On peut pour cela effectuer une thermosoudure de trottoirs (19, 20) du fond (15) du conteneur sur le séparateur (2) et/ou des chambres de recombinaison du faisceau, lors de l'assemblage du fond du conteneur.

L'invention permet à l'accumulateur de fonctionner dans une position couchée, en limitant la sollicitation sur les bornes et les risques de court-circuit du fait du déplacement du faisceau.

## Description

La présente invention a pour objet un accumulateur. Elle concerne aussi un procédé de fabrication d'un tel accumulateur.

L'invention concerne le domaine des batteries ou générateurs électrochimiques. De tels générateurs comprennent dans un conteneur un ou plusieurs faisceaux d'électrodes planes, cylindriques ou concentriques, et un électrolyte aqueux ou non aqueux. L'invention s'applique indépendamment de la nature de l'électrolyte, de la forme des électrodes, du couple électrochimique, ou du fait que le générateur est un générateur primaire ou secondaire.

Le document FR-2 737 046 décrit un générateur électrochimique fonctionnant en toute position. Ce générateur comprend un conteneur muni d'une borne. Dans ce conteneur sont disposés un faisceau électrochimique et un électrolyte. Ce document indique qu'il est souhaitable que le générateur puisse fonctionner dans toutes les positions, et soulève le problème de déplacement du volume libre laissé dans le générateur pour compenser les dilatations de l'électrolyte. Pour éviter que dans une position couchée de l'accumulateur, les faisceaux ne baignent plus dans l'électrolyte, ce document propose de remplacer le volume libre par un moyen solide compressible et inerte chimiquement.

L'invention propose de résoudre le problème nouveau de la fixation des faisceaux dans ce type de batterie. Dans les batteries du type décrit dans FR-2 737 046, les faisceaux sont généralement fixés par un ensemble de connexions permettant de relier les électrodes d'une même polarité à une borne donnée. Cette solution est parfaitement satisfaisante pour un fonctionnement des batteries dans leur position de consigne, i.e. avec les bornes sur la face supérieure, telle que le faisceau est suspendu aux bornes. Toutefois, dans une position couchée de la batterie, il s'avère que faisceau exerce sur les bornes des sollicitations beaucoup plus importantes. Des calculs montrent que pour un faisceau Ni-MH étanche de 100Ah en production chez la demanderesse, les sollicitations des bornes par le faisceau sont environ six fois plus importantes en position couchée qu'en position verticale. Outre les problèmes mécaniques de maintien du faisceau, le fonctionnement en position couchée augmente le risque de courts-circuits, du fait des déformations du faisceau.

L'invention se propose encore de résoudre le problème nouveau du contact thermique entre le faisceau et le conteneur. En effet, il s'avère que dans la position couchée de la batterie, le maintien en porte à faux des faisceaux par les bornes nuit au contact thermique entre les faisceaux et le bac du conteneur : le contact thermique sur la partie supérieure du faisceau est dégradé par rapport à la partie inférieure. Comme ce contact thermique est utilisé pour le refroidissement ou le réchauffement de la batterie, la gestion thermique de la batterie est moins efficace. Le fait que le faisceau soit plus chaud plus longtemps diminue la durée de vie de la batterie. A titre d'exemple, une augmentation de la température de 10°C sur toute la durée de vie divise par deux la durée de vie. En outre, il existe une température maximale d'utilisation qui risque d'être atteinte plus souvent. Si tous les faisceaux ne sont pas à la même température, i.e. s'ils ne sont pas refroidis de la même façon, le fonctionnement de la batterie n'est pas homogène et est donc moins efficace.

L'invention concerne aussi le problème de la fixation des sorties électriques étanches dans les batteries. Elle s'applique tout particulièrement aux batteries destinées à pouvoir fonctionner dans toutes les positions.

Le document EP-0 769 820 décrit une sortie électrique étanche pour générateur secondaire, dans laquelle un alésage cylindrique est ménagé dans le conteneur. Dans cet alésage est introduite une pièce - une borne - présentant un épaulement muni d'une rainure circulaire. Un joint torique est disposé dans la rainure, et est comprimé lors du montage de la borne à l'aide d'une rondelle à griffes. Ce dispositif accepte des tolérances importantes dans le plan de la paroi du conteneur, sans pertes d'étanchéité. Il n'assure toutefois pas un positionnement précis de la borne par rapport au conteneur. En outre le positionnement du joint au montage n'est pas assuré par la conception même de la pièce. Cette sortie n'accepte que très peu les tolérances dans le plan perpendiculaire à la paroi du couvercle. Enfin la géométrie du logement du joint n'assure pas une compression optimale.

Est aussi connue une traversée présentant un alésage droit dans lequel est montée une pièce cylindrique entourée d'un joint torique, serré entre les deux cylindres. Cette traversée permet une tolérance importante dans la direction verticale, et assure un positionnement précis dans la direction horizontale. Toutefois elle est difficile à monter et n'assure pas nécessairement un positionnement adéquat du joint. En outre cette traversée n'accepte que très peu de tolérances dans le plan de la paroi.

Pour réaliser les traversées électriques étanches, la demanderesse utilise un ou deux logements en forme de cône avec un angle au sommet de 90°, ménagés dans la paroi du conteneur, i.e. un angle de la paroi du logement avec la paroi du conteneur de 45°. La borne est ensuite fixée dans le logement conique et entourée d'un joint torique. On prévoit un jeu vertical faible entre la borne et le logement, de sorte à assurer l'étanchéité. Une telle traversée étanche est par exemple fournie sur les produits commercialisés sous la référence STM. Elle est représentée sur la figure 11 de la demande FR-2 651 606.

Cette traversée fonctionne correctement. Elle pourrait encore être améliorée des points de vue suivants. Lors du montage, le jeu vertical entre la borne et le bac est faible, de sorte qu'il est difficile de visser directement une connexion sur la borne. La position du joint torique n'est pas assurée au montage par la conception de la traversée. En outre, en théorie, la géométrie du logement du joint n'est pas optimale pour assurer la compression correcte du joint. Ce logement induit aussi des contraintes dans le conteneur.

L'objet de la présente invention est de proposer un accumulateur qui pallie les inconvénients susmentionnés, et qui permette d'apporter une solution à ces problèmes nouveaux. Elle propose en outre une solution aux problèmes des traversées étanches de l'art antérieur, et assure un montage correct de la traversée, avec des tolérances de fabrication élevées, et un bon compromis entre les tolérances dans le plan de la paroi et dans le plan perpendiculaire à celle-ci.

Pour cela, l'invention propose un accumulateur présentant un conteneur, comportant au moins une borne de sortie de courant, dans lequel est disposé un faisceau relié à ladite borne et comprenant une pluralité d'électrodes planes et au moins un séparateur, au moins un composant dudit faisceau étant soudé à la paroi dudit conteneur située d'un côté distinct de celle portant la borne, caractérisé en ce que ledit composant est choisi parmi un séparateur et une chambre de recombinaison.

La soudure peut être une thermosoudure ou une soudure aux ultrasons.

Avantageusement, la surface soudée du faisceau représente plus de 2%, de préférence de l'ordre de 5% de la surface de la section du faisceau parallèle à la paroi.

Dans un mode de réalisation, le faisceau est maintenu par soudure sur la paroi du conteneur sur son côté opposé à la borne de sortie. Dans ce cas ledit composant est soudé sur la paroi du conteneur du côté opposé à la borne.

Dans un autre mode de réalisation, ledit composant est soudé sur des trottoirs de ladite paroi.

Selon une variante le faisceau est maintenu par soudure du séparateur sur la paroi, de préférence par soudure sur des trottoirs de la paroi.

Selon une autre variante, ledit faisceau comprend en outre au moins une chambre de recombinaison, dans lequel ledit composant est ladite chambre de recombinaison. On peut prévoir que le faisceau présente en outre des chambres de recombinaison, et qu'il est maintenu par soudure des chambres de recombinaison sur la paroi, de préférence par soudure sur des trottoirs de la paroi.

Selon encore une autre variante, au moins deux composants dudit faisceau sont soudés à la paroi dudit conteneur, lesdits composants étant au moins un séparateur et au moins une chambre de recombinaison.

Dans un autre mode de réalisation, ledit faisceau est en outre maintenu sur au moins une face parallèle au plan des électrodes, et ledit conteneur présente des moyens de maintien du faisceau sur au moins une paroi parallèle au plan des électrodes.

Il est aussi possible que les moyens de maintien comprennent des rainures ou des épaulements.

Dans encore un autre mode de réalisation, l'accumulateur présente une traversée étanche, comprenant un logement de joint disposé dans la paroi du conteneur, le logement présentant une face sensiblement parallèle à la paroi et une face inclinée formant avec la paroi un angle a de 70 à 80°, de préférence de 75 à 80°.

L'invention concerne aussi une batterie de tels accumulateurs.

L'invention propose enfin un procédé d'assemblage d'un accumulateur, comprenant les étapes de
- montage d'un faisceau dans un conteneur, par un côté ouvert opposé à une borne du conteneur,
- positionnement du fond du conteneur, et
- thermosoudure du fond du conteneur sur les parois du conteneur,
dans lequel l'étape de thermosoudure comprend la thermosoudure d'au moins une partie du fond sur le faisceau.

Avantageusement, l'étape de thermosoudure comprend la thermosoudure de trottoirs du fond.

Elle peut aussi comprendre la thermosoudure d'au moins une partie du fond sur le séparateur du faisceau.

Dans un mode de mise en oeuvre, la surface thermosoudée du faisceau représente plus de 2%, de préférence de l'ordre de 5% de la surface de la section du faisceau parallèle au fond.

L'étape de soudure peut comprendre la soudure d'au moins une partie du fond sur une chambre de recombinaison du faisceau.

D'autres caractéristiques et avantages de l'invention apparaîtront à la lecture de la description suivante de modes de réalisation de l'invention, donnée à titre d'exemple et en référence aux dessins annexés qui montrent:
- figures 1 et 2, des vues schématiques en coupe d'un accumulateur de l'art antérieur,
- figure 3, une vue schématique en coupe d'une batterie selon l'invention, avant thermosoudure,
- figure 4, une vue schématique en coupe d'une batterie selon l'invention, après thermosoudure,
- figure 5, une vue schématique en coupe d'un fond de batterie selon un autre mode de réalisation de l'invention,
- figure 6, une vue de dessus du fond de la figure 5,
- figure 7, une vue schématique d'un accumulateur selon un autre mode de réalisation de l'invention,
- figure 8, une vue schématique en coupe d'une traversée étanche selon l'invention.

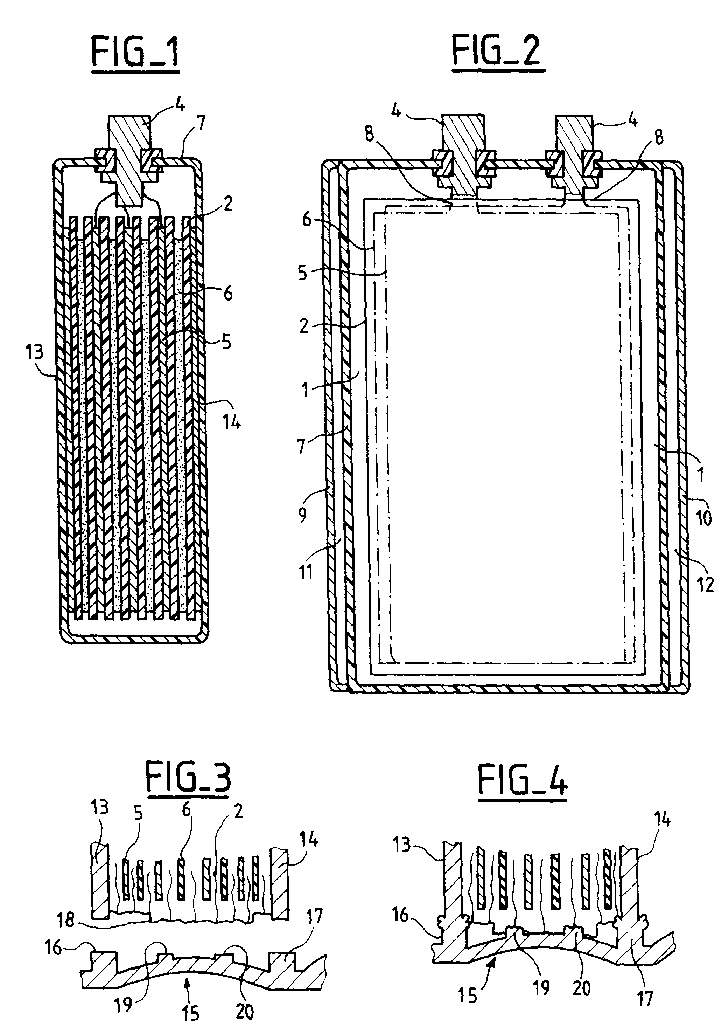

La figure 1 montre une vue schématique en coupe d'un accumulateur de l'art antérieur, dans un plan perpendiculaire au plan des électrodes. L'accumulateur comprend un conteneur 7, éventuellement en matériau isolant, muni d'au moins une borne de sortie de courant. Dans l'exemple de la figure 1 il s'agit d'une borne de polarité positive. Dans le conteneur 7 est disposé un faisceau électrochimique imprégné d'électrolyte. Ce faisceau est composé d'une alternance d'électrodes positives 5 et d'électrodes négatives 6, entre lesquelles sont disposés un séparateur 2, typiquement formé de feuilles de polypropylène, et le cas échéant des grilles définissant des chambres de recombinaison (RGC, acronyme de l'anglais : "recombination gaz chamber").

La figure 2 montre une vue schématique en coupe de l'accumulateur de la figure 1, dans un plan parallèle aux électrodes du faisceau. On reconnaît sur la figure 2 les mêmes éléments, qui ne sont pas décrits de nouveau. On prévoit entre le conteneur 7 et le faisceau un jeu 1 car au cours du cyclage, les électrodes subissent des variations dimensionnelles, et notamment un gonflement partiellement irréversible. Le jeu permet en outre de ne pas abîmer le bord des plaques lorsque le faisceau est monté dans le conteneur. Le jeu est généralement prévu sur les faces latérales du faisceau, le faisceau étant maintenu sur les faces planes par les parois du conteneur. Le faisceau est fixé dans le conteneur par la liaison 8 avec la borne 4. Dans le mode de réalisation des figures 1 et 2, sont prévues des flasques de refroidissement sur les parois du conteneur 7. Ces flasques 9 et 10 définissent des compartiments 11 et 12 de circulation d'un fluide de refroidissement.

Comme expliqué plus haut, l'invention propose de résoudre le problème de la sollicitation des bornes de sortie lorsque l'accumulateur fonctionne en position couchée. Du fait du jeu 1, le faisceau se déplace lorsque l'accumulateur est couché, et ceci sollicite la liaison 8 et la borne 4. On peut provoquer une déchirure de la liaison borne-électrode ou bien une déformation qui pourrait conduire à un court-circuit ou à une perte de serrage dans le cas de têtes de plaques serrées par un boulon.

Pour résoudre ce problème, l'invention propose de maintenir le faisceau, sur au moins une de ses faces, et notamment sur sa face opposée à la borne ou aux bornes. On assure de la sorte que le faisceau est maintenu lorsque l'accumulateur est couché, non seulement du côté de la borne, mais aussi du côté opposé ou sur un côté adjacent. Ceci diminue les sollicitations sur la borne et sur le faisceau et réduit les risques de rupture de la liaison entre le faisceau et la borne, ainsi que le risque de court-circuit.

En outre, le faisceau garde une même position à l'intérieur du conteneur, de sorte que le contact thermique avec les parois et avec le fluide en circulation dans les compartiments des flasques reste sensiblement identique dans toutes les positions de l'accumulateur.

Les figures 3 et 4 montrent un mode de réalisation préféré de l'invention, dans lequel le faisceau est maintenu par thermosoudure lors du montage du fond du conteneur.

La figure 3 montre une vue schématique en coupe d'une batterie selon l'invention avant thermosoudure. La figure 3 montre une vue partielle d'un conteneur présentant plusieurs alvéoles parallèles, la figure 3 montrant la partie inférieure d'une seule de ces alvéoles. On reconnaît sur la figure 3 les parois latérales 13 et 14 du conteneur 7, les électrodes 5 et 6, ainsi que le séparateur 2.

Le conteneur, dans ce mode de réalisation présente un fond 15 rapporté, qui est assemblé par thermosoudure de ses cloisons 16 et 17 respectivement sur les parois latérales 13 et 44 du conteneur. Entre les cloisons 16 et 17, le fond 15 présente une forme incurvée, avec une concavité dirigée vers l'extérieur de l'accumulateur. Ceci assure que dans le cas d'une batterie étanche, la légère déformation induite par la surpression interne de la batterie reste contenue dans le volume parallélépipédique enveloppant l'accumulateur. Dans le mode de réalisation de la figure 3, le séparateur 2 présente en outre, dans la région centrale, i.e. au voisinage de la partie incurvée du fond, une saillie 18 destinée à venir en contact avec le fond 15. Cette saillie dépasse par exemple d'environ 0 à 5mm par rapport au reste du séparateur. De la sorte, avant thermosoudure du fond du bac, la partie en saillie du séparateur arrive sensiblement au niveau de l'extrémité des parois latérales du conteneur. On pourrait aussi prévoir que l'ensemble du séparateur dépasse des parois latérales du conteneur.

On peut aussi avantageusement prévoir, en regard de cette saillie du séparateur, des éléments correspondants en saillie sur le fond du conteneur. Dans le mode de réalisation, on a ainsi prévu deux épaulements ou trottoirs 19 et 20. La dimension de ces épaulements est de préférence telle que les trottoirs 19 et 20 sont sensiblement au même niveau que les extrémités des cloisons 16 et 17. En outre, il est avantageux de prévoir que la largeur des trottoirs 19 et 20 est sensiblement égale à celle des cloisons 16 et 17, ce qui facilite le thermosoudage. La présence des trottoirs 19 et 20 est particulièrement avantageuse dans le cas où le fond du conteneur est plan et ne présente pas de surface incurvée vers l'intérieur.

Le procédé de fabrication d'un accumulateur ou d'une batterie dans un tel mode de réalisation est le suivant. Le ou les faisceaux sont montés dans le conteneur 7, en les introduisant par le fond. Les faisceaux sont alors guidés par les parois du bac pour s'introduire précisément dans les logements du haut du conteneur. Ceci réduit les tolérances par rapport à la solution d'un couvercle rapporté. Les bornes sont alors fixées sur la paroi du conteneur, par exemple à l'aide d'une traversée étanche du type décrit plus bas. Ensuite, on positionne le fond et on le thermosoude de sorte à former un conteneur étanche. On peut alors introduire l'électrolyte dans le conteneur, et l'accumulateur ou la batterie est prête à fonctionner après une formation électrique.

La figure 4 montre une vue schématique en coupe de l'accumulateur de la figure 3 après thermosoudure. La thermosoudure est effectuée par les techniques connues en soi. Le fond du conteneur est soudé sur les parois latérales 13 et 14 par l'intermédiaire des cloisons 16 et 17 de sorte à assurer le cas échéant l'étanchéité du conteneur. En outre, lors de l'étape de thermosoudure, la partie en saillie 18 du séparateur se trouve soudée aux trottoirs 19 et 20 du fond, de sorte à assurer le maintien du faisceau aussi bien dans son plan que perpendiculairement à son plan. Dans ce mode de réalisation le séparateur se prolonge avantageusement au-delà des électrodes d'au moins 5mm, de sorte à assurer que seul le séparateur est sollicité lors de l'étape de soudure.

Dans le mode de réalisation des figures 3 et 4, les trottoirs prévus sur le fond du conteneur et la partie en saillie du séparateur s'étendent dans le plan des électrodes. En fait ceci n'est pas indispensable, et la partie en saillie du séparateur comme le cas échéant les trottoirs peuvent aussi s'étendre perpendiculairement au plan des électrodes. En outre, la partie en saillie du séparateur et les trottoirs peuvent présenter une forme différente d'une droite, par exemple un carré, un cercle ou autre.

La demanderesse a procédé à des essais pour un faisceau de dimension en section de 100mm x 34mm. Ce faisceau a été soudé, dans la direction perpendiculaire au plan des électrodes, sur deux trottoirs de 3mm de large et 34mm de long, i.e. s'étendant sur toute l'épaisseur du faisceau, et régulièrement espacés le long du faisceau. On constate que cette configuration suffit pour obtenir une bonne tenue mécanique du faisceau, et pour assurer son maintien. Dans cet exemple, la surface soudée est de l'ordre de 6% de la surface du faisceau. Une surface soudée de l'ordre de 2% de la surface du faisceau conviendrait aussi.

Dans un autre mode de réalisation, on peut souder sur le fond du conteneur les chambres de recombinaison présentes dans le faisceau. Ceci est simplement possible en prolongeant les chambres de recombinaison de sorte à ce qu'elles dépassent des électrodes. Cette alternative est aussi combinable avec une soudure du faisceau impliquant les séparateurs, telle que décrite précédemment.

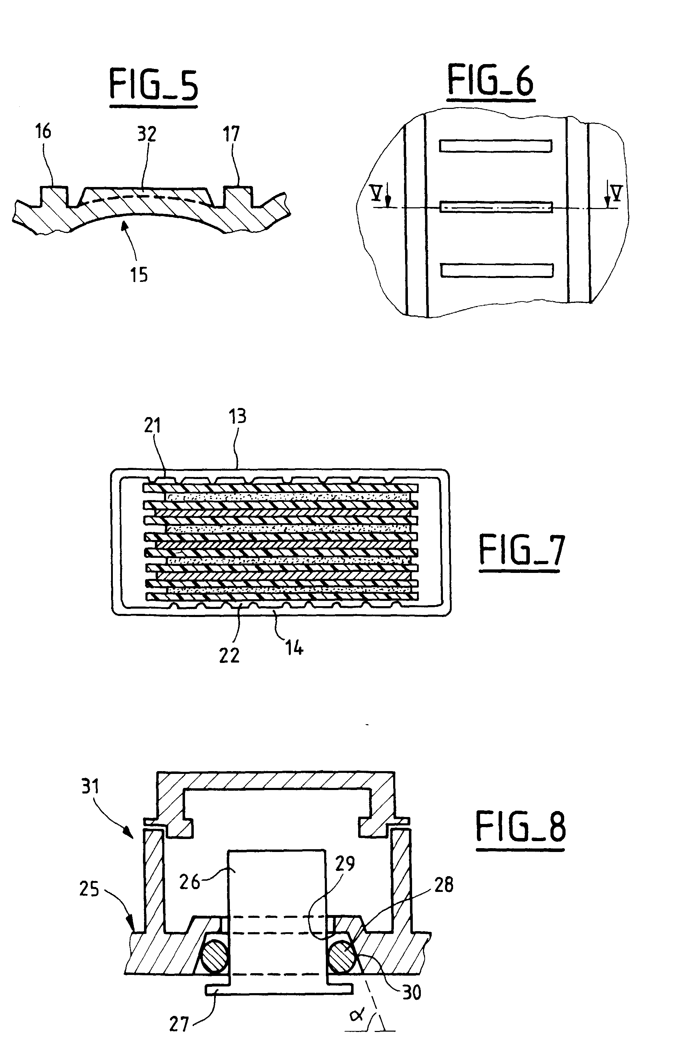

La figure 5 montre une vue schématique en coupe d'un fond de batterie selon un autre mode de réalisation de l'invention, et la figure 6 une vue de dessus du fond de la figure 5. Dans le mode de réalisation des figures 5 et 6, les trottoirs de thermosoudure 32, 33 et 34 sont perpendiculaires au plan des électrodes.

La figure 7 montre une vue schématique d'un autre mode de réalisation de l'invention, en coupe dans un plan perpendiculaire aux électrodes et parallèle au fond du conteneur. Dans le mode de réalisation de la figure 7, le faisceau est maintenu sur les côtés adjacents à la ou aux bornes et parallèles au plan des électrodes, i. e. sur les grandes faces du faisceau. On prévoit à cet effet dans les parois latérales 13 et 14 du conteneur des rainures 21 et 22. Les rainures permettent de maintenir le faisceau par ses électrodes extrêmes, et de limiter les déplacements du faisceau lorsque l'accumulateur est couché avec le plan des électrodes vertical. Les rainures présentent une profondeur de quelques dixièmes de millimètre et s'étendent sur la surface en contact avec les électrodes externes du faisceau. Elles sont parallèles à la direction d'introduction des électrodes dans le conteneur. Le gonflement du faisceau en utilisation remplit le jeu éventuel et limite le déplacement des électrodes.

On pourrait aussi dans le mode de réalisation de la figure 7 prévoir des épaulements en lieu et place des rainures. Le mode de réalisation de la figure 7 peut être combiné avec les modes de réalisation des figures 3 à 5.

L'invention dans tous ses modes de réalisation permet de limiter les sollicitations sur les bornes de la batterie lorsque celle-ci fonctionne en position couchée. L'invention s'applique pour une utilisation de l'accumulateur couché, de sorte que le plan du faisceau soit horizontal ou vertical. Elle s'applique aussi dans le cas de faisceaux d'une autre forme, par exemple pour des électrodes spiralées ou concentriques.

L'invention concerne aussi une traversée électrique étanche, pour un accumulateur électrochimique. Une telle traversée est notamment utile pour les accumulateurs destinés à fonctionner en position couchée car elle permet d'assurer un contact électrique entre les électrodes du faisceau et les bornes tout en évitant la perte d'électrolyte ou de gaz. L'invention s'applique aussi à des batteries fonctionnant debout.

La figure 8 montre une vue en coupe d'une traversée selon l'invention. Cette traversée est formée à travers une paroi, par exemple une paroi 25 du conteneur d'une batterie ou d'un accumulateur. La traversée est destinée à recevoir une pièce généralement cylindrique 26, telle une borne, qui présente un épaulement cylindrique 27. La traversée permet de faire passer la borne 26 à travers la paroi 25.

Selon l'invention, le joint torique 28 de la traversée est reçu dans un logement ménagé dans la paroi, présentant une face 29 sensiblement parallèle à la paroi et une face inclinée 30 formant avec la paroi un angle a de 70° à 80°, et de préférence un angle a de 75° à 80°. En d'autres termes, la face inclinée forme avec l'axe de l'alésage un angle de 10° à 20° et de préférence un angle de 10° à 15°.

Sur la figure 8 la partie cylindrique 31 du couvercle au-dessus du logement 29, 30 sert de butée pour la borne en position couchée. Le montage de la traversée de l'invention s'effectue de la façon suivante. On dispose autour de la borne un joint torique d'une taille adaptée. On introduit ensuite à travers l'alésage la borne et son joint, par le dessous - par exemple en introduisant le faisceau par le fond du conteneur, comme expliqué plus haut. On peut ensuite serrer la borne, par exemple avec une rondelle à griffe comme dans les exemples de l'art antérieur, ou par tout autre moyen approprié. Le joint est alors comprimé entre la paroi cylindrique de la borne et la paroi inclinée 30. Une solution avantageuse est d'utiliser une rondelle à griffe réalisée dans une matière peu onéreuse et peu sensible au brouillard salin - par exemple un polymère technique renforcé ou non par des charges ou fibres. Cette rondelle maintient la borne en place, contre la paroi et assure la compression du joint. La position du joint au cours du montage est assurée par la forme de son logement, et il est très peu probable que le joint sorte de son logement lors du montage de la borne. Le bon serrage de la connexion peut être vérifié par la mesure de la continuité électrique entre la borne et la connexion. En outre le montage de la borne est impossible si le joint n'est pas correctement en place, ce qui assure un montage correct et une bonne étanchéité ultérieure.

L'invention permet d'assurer une compression du joint torique de l'ordre de 10 à 30%, dans tous les cas, en tenant compte des variations dimensionnelles des pièces composant la traversée.

Elle est d'un coût de fabrication faible : en effet, grâce au choix de l'angle, l'étanchéité se fait principalement sur la face cylindrique de la borne 26 et non pas sur l'épaulement. Ceci implique que les tolérances sur l'épaulement peuvent être plus importantes; ceci réduit le coût de fabrication car un cylindre précis est plus facile à réaliser qu'une surface plane. On peut fabriquer la borne par usinage ou matriçage d'un cylindre, qui est ensuite soudé sur une plaque laminée, puis coupé à longueur. Un tel mode de fabrication est beaucoup moins onéreux que la fabrication d'une borne par usinage, avec des tolérances faibles sur l'épaulement.

Elle permet en outre de diminuer les tolérances d'usinage des pièces. La tolérance des pièces est plus grande d'au moins ±0,2mm par rapport à une traversée présentant un alésage cylindrique du type décrit plus haut. Ceci correspond à un gain de l'ordre de ±30%.

La traversée de l'invention permet en outre une détection simple de la présence du joint. On peut à cet effet prévoir une simple fente dans une partie non fonctionnelle de la traversée afin de permettre une visualisation du joint.

Les valeurs de l'angle du logement du conteneur permettent en outre d'obtenir des tolérances verticales importantes. De fait, dans la direction de l'alésage, les tolérances sont d'autant plus importantes que l'angle entre la face inclinée 30 et la paroi du conteneur est important. Une valeur supérieure à 70°, et de préférence de l'ordre de 75° permet d'obtenir des tolérances verticales supérieures à 0,8mm pour une borne de 16mm de diamètre, qui sont suffisantes pour assurer un montage facile des bornes et permettre de visser directement une connexion sur la borne.

Une valeur d'angle inférieure à 80° permet d'introduire facilement le joint dans son logement. Une valeur supérieure à 80° rendrait plus difficile l'introduction de la borne dans le logement.

En outre, le choix d'un angle dans cette plage de valeur permet de limiter les contraintes induites par la traversée dans le bac. Les efforts radiaux augmentent avec l'angle, ce qui permet presque un auto-maintien du joint dans son logement. Une valeur dans la plage retenue assure que le joint reste dans son logement, sans avoir tendance à l'ouvrir, ce qui aurait pour conséquence de défaire l'étanchéité.

Enfin la taille réduite des traversées de bornes selon l'invention permet de rapprocher les bornes les unes des autres; on peut alors regrouper les bornes au centre du couvercle. Ceci est avantageux du point de vue des contraintes de dilatation différentielle entre les faisceaux et le conteneur et du point de vue de la place libre pour d'autres usages. L'invention fournit aussi une traversée d'une hauteur réduite, ce qui est avantageux dans la conception générale de la batterie.

Bien entendu, l'invention est susceptible de variations par rapport aux modes de réalisation préférés décrits en référence aux figures. Ainsi, on peut utiliser pour le conteneur des matériaux thermosoudables variés, tels que le polypropylène (PP), le polyamide (PA), le polyéther imide (PEI), le polyéther sulfone (PES), le polyoxyméthylène (POM) ou leurs alliages. On peut envisager une soudure aux ultrasons au lieu d'une soudure thermique. La face 29 du logement du joint, qui dans l'exemple est parallèle au plan de la paroi, peut former avec celle-ci un angle, par exemple un angle de 0° à 45°. L'épaulement 27 de la borne pourrait aussi former avec l'axe de la borne un angle différent de 90°, dans la mesure où le serrage s'effectue principalement entre la paroi cylindrique de la borne et la paroi inclinée 30.

## Revendications

1. Accumulateur présentant un conteneur (7), comportant au moins une borne (4) de sortie de courant, dans lequel est disposé un faisceau relié à ladite borne et comprenant une pluralité d'électrodes planes (5, 6) et au moins un séparateur (2), au moins un composant dudit faisceau étant soudé à la paroi dudit conteneur située d'un côté distinct de celle portant la borne, caractérisé en ce que ledit composant est choisi parmi un séparateur et une chambre de recombinaison.

2. Accumulateur selon la revendication 1, dans lequel la soudure est une thermosoudure ou une soudure aux ultrasons.

3. Accumulateur selon l'une des revendications 1 et 2, dans lequel ledit composant est soudé sur la paroi (15) du conteneur du côté opposé à la borne.

4. Accumulateur selon l'une des revendications 1 à 3, dans lequel ledit composant est soudé sur des trottoirs (17, 18) de ladite paroi.

5. Accumulateur selon l'une des revendications 1 à 4, dans lequel la surface soudée dudit faisceau représente plus de 2%, de préférence de l'ordre de 5% de la surface de la section du faisceau parallèle à ladite paroi.

6. Accumulateur selon l'une des revendications 1 à 5, dans lequel ledit composant est un séparateur.

7. Accumulateur selon l'une des revendications 1 à 6, dans lequel ledit faisceau comprend en outre au moins une chambre de recombinaison, dans lequel ledit composant est ladite chambre de recombinaison.

8. Accumulateur selon l'une des revendications 1 à 7, dans lequel au moins deux composants dudit faisceau sont soudés à la paroi dudit conteneur lesdits composants étant au moins un séparateur et au moins une chambre de recombinaison.

9. Accumulateur selon l'une des revendications 1 à 8, caractérisé en ce que ledit faisceau est en outre maintenu sur au moins une face parallèle au plan des électrodes, et en ce que ledit conteneur présente des moyens de maintien du faisceau sur au moins une paroi parallèle au plan des électrodes.

10. Accumulateur selon l'une des revendications 1 à 9, caractérisé en ce que lesdits moyens de maintien comprennent des rainures ou des épaulements.

11. Accumulateur selon l'une des revendications 1 à 10, dans lequel une traversée étanche, comprenant un logement de joint (28) disposé dans la paroi (25) du conteneur, le logement présentant une face (29) sensiblement parallèle à la paroi (25) et une face inclinée formant avec la paroi un angle a de 70° à 80°.

12. Accumulateur selon la revendication 11, dans lequel la face inclinée forme avec la paroi un angle a de 75° à 80°.

13. Batterie d'accumulateurs selon l'une des revendications 1 à 12.

14. Procédé d'assemblage d'un accumulateur selon l'une des revendications 1 à 12, comprenant les étapes de
- montage d'un faisceau (5, 6, 2) dans un conteneur (7), par un côté ouvert opposé à une borne (4) du conteneur (7),
- positionnement du fond (15) du conteneur et - soudure du fond (15) du conteneur sur les parois du conteneur,
dans lequel l'étape de soudure comprend la thermosoudure ou la soudure par ultrasons d'au moins une partie du fond (15) sur le faisceau.

15. Procédé selon la revendication 14, caractérisé en ce que l'étape de soudure comprend la soudure de trottoirs (17, 18) du fond.

16. Procédé selon l'une des revendications 14 et 15, caractérisé en ce que l'étape de soudure comprend la soudure d'au moins une partie du fond (15) sur le séparateur (2) du faisceau.
